# EUROPÄISCHE PATENTSCHRIFT

(11) **EP 3 271 600 B1**
(45) Veröffentlichungstag und Bekanntmachung des Hinweises auf die Patenterteilung: **22.05.2019**
(21) Anmeldenummer: 16714225.6
(22) Anmeldetag: 08.03.2016
(51) Int. Cl.: F16D 13/70, F16D 13/75

(54) **REIBUNGSKUPPLUNG MIT VERSCHLEISSNACHSTELLEINRICHTUNG**
FRICTION CLUTCH COMPRISING A WEAR ADJUSTMENT DEVICE
EMBRAYAGE À FRICTION ÉQUIPÉ D'UN DISPOSITIF DE RATTRAPAGE D'USURE

(30) Priorität: 18.03.2015 DE 102015204864
(43) Veröffentlichungstag der Anmeldung: 24.01.2018
(73) Patentinhaber: Schaeffler Technologies AG & Co. KG, 91074 Herzogenaurach (DE)
(72) Erfinder: SCHNEIDER, Michael, 76534 Baden-Baden (DE); REICH, Frederic, 57230 Schorbach (FR)
(86) Internationale Anmeldenummer: PCT/DE2016/200124
(87) Internationale Veröffentlichungsnummer: WO 2016/146119

(56) Entgegenhaltungen:
- WO-A1-98/42994
- DE-A1- 10 155 146
- DE-T2- 69 512 757
- JP-B2- 2 517 821
- US-A- 5 404 979

## Beschreibung

Die vorliegende Erfindung betrifft eine Reibungskupplung gemäß dem Oberbegriff des Patentanspruchs 1. Die vorliegende Erfindung betrifft insbesondere eine Reibungskupplung zum Kuppeln einer Antriebswelle eines Kraftfahrzeugmotors mit mindestens einer Getriebeeingangswelle eines Kraftfahrzeuggetriebes. Solche Reibungskupplungen dienen insbesondere der Unterbrechung eines Drehmomentflusses von dem Kraftfahrzeugmotor auf die zumindest eine Getriebeeingangswelle des Kraftfahrzeuggetriebes.

Es ist bekannt, dass Reibungskupplungen zum Ausgleich eines auftretenden Verschleißes von Reibbelägen mit einer Nachstelleinrichtung versehen sind. Hier wird eine infolge eines Verschleißes ungünstige Entwicklung der Anpresskraft eines eine Anpressplatte der Reibungskupplung beaufschlagenden Betätigungssystems zur Bewegung der Anpressplatte, beispielsweise einer Tellerfeder, erfasst und abhängig von der Anpresskraft eine Nachstellung bewirkt. Alternativ kann ein bei einem Verschleiß der Reibbeläge der Kupplungsscheibe auftretender Fehlabstand zwischen dem Kupplungsgehäuse und dem Betätigungssystem ermittelt ("sensiert") und abhängig von dem Fehlabstand korrigiert werden. Zur Korrektur werden dabei zwischen der Gegenplatte und dem Betätigungssystem angeordnete Ausgleichsmittel wie Rampensysteme oder Gewinde verdreht.

Eine Reibungskupplung, die auf den Oberbegriff des Patentanspruchs 1 lesbar ist, ist aus der DE 101 55 146 A1, sowie der EP 0 720 702 B1 bekannt.

Aufgabe der Erfindung ist es, eine Reibungskupplung mit einer Nachstelleinrichtung zu schaffen, wobei die Nachstelleinrichtung mit einem neuen Nachstellmechanismus versehen ist.

Diese Aufgabe wird gelöst mit einer Reibungskupplung gemäß den Merkmalen des unabhängigen Patentanspruchs 1. Weitere vorteilhafte Ausgestaltungen der Reibungskupplung sind in den abhängig formulierten Patentansprüchen angegeben. Es ist darauf hinzuweisen, dass die in den abhängig formulierten Ansprüchen einzeln aufgeführten Merkmale in beliebiger technologisch sinnvoller Weise miteinander kombiniert werden können und weitere Ausgestaltungen der Erfindung definieren. Darüber hinaus werden die in den Ansprüchen angegebenen Merkmale in der Beschreibung näher präzisiert und erläutert, wobei weitere bevorzugte Ausgestaltungen der Erfindung dargestellt werden.

Die erfindungsgemäße Reibungskupplung zum Kuppeln einer Antriebswelle eines Kraftfahrzeugmotors mit mindestens einer Getriebeeingangswelle eines Kraftfahrzeuggetriebes weist einen Kupplungsdeckel, eine in Axialrichtung der Reibungskupplung verlagerbare Gegendruckplatte, eine relativ zur Gegendruckplatte axial verlagerbare Anpressplatte zum reibschlüssigen Anpressen einer Kupplungsscheibe zwischen der Gegendruckplatte und der Anpressplatte und eine an der Gegendruckplatte abgestützte Nachstelleinrichtung zum Nachstellen eines verschleißbedingten Fehlabstands der Anpressplatte zur Gegendruckplatte auf, wobei die Nachstelleinrichtung einen in Umfangsrichtung verstellbaren Rampenring, der mit mehreren in axialer Richtung abstehenden Rampen versehen ist, und eine an dem Rampenring angreifende Verstelleinheit zum Verdrehen des Rampenrings aufweist, und wobei die Verstelleinheit an der Gegendruckplatte befestigt ist.

Bei der hier vorgeschlagenen Reibungskupplung handelt es sich insbesondere um eine Einscheibentrockenkupplung oder Doppelkupplung, die der Unterbrechung eines Drehmomentflusses von einem Kraftfahrzeugmotor auf zumindest eine Getriebeeingangswelle eines Kraftfahrzeuggetriebes dient. Die Reibungskupplung weist hierzu einen Kupplungsdeckel und eine Anpressplatte auf, die bevorzugt aus Metall und/oder Blech bestehen. Die Anpressplatte ist zum reibschlüssigen Anpressen einer Kupplungsscheibe an einer Gegendruckplatte durch eine Tellerfeder verstellbar. Die Gegendruckplatte ist insbesondere mit einem Massenschwungradsystem, beispielsweise nach Art eines Einmassenschwungradsystems oder Zweimassenschwungradsystems, des Kraftfahrzeugmotors verbunden. Die Anpressplatte ist in dem Kupplungsdeckel insbesondere drehfest gelagert und in einer axialen Richtung durch die Tellerfeder begrenzt verlagerbar. Die Tellerfeder ist gehäuseseitig abgestützt und insbesondere durch eine Aktoreinrichtung betätigbar.

An der Gegendruckplatte ist zudem eine Nachstelleinrichtung zum Nachstellen eines verschleißbedingten Fehlabstands der Anpressplatte zur Gegendruckplatte abgestützt. Die Nachstelleinrichtung weist einen in Umfangsrichtung verstellbaren Rampenring mit mehreren in axialer Richtung abstehenden Rampen auf. Weiterhin weist die Nachstelleinrichtung eine an dem Rampenring angreifende Verstelleinheit zum Verdrehen des Rampenrings auf. Der prinzipielle Aufbau der Nachstelleinrichtung wird beispielsweise auf der Seite 5, letzter Absatz bis Seite 8, erster Absatz der unveröffentlichten deutschen Patentanmeldung 10 2014 216 594.6, der Seite 6, letzter Absatz bis Seite 9, letzter Absatz der unveröffentlichten deutschen Patentanmeldung 10 2014 224 375.0 und der Seite 5, letzter Absatz bis Seite 8, letzter Absatz der unveröffentlichten deutschen Patentanmeldung 10 2015 200 248.9 beschrieben. Die vorgenannten Beschreibungsstellen der Nachstelleinrichtung werden hiermit vollumfänglich in Bezug genommen. Im Unterschied zu bekannten Reibungskupplungen ist die Verstelleinheit der Nachstelleinrichtung an der Gegendruckplatte befestigt. Dies hat unter anderem den Vorteil, dass ein Schwungraddeckel der Reibungskupplung deutlich einfacher gestaltet werden kann, da an diesem keine Rampen mehr vorgesehen werden müssen.

Ebenfalls vorteilhaft ist es, wenn die Verstelleinheit durch einen Befestigungshalter an der Gegendruckplatte befestigt ist. Der Befestigungshalter dient der Verbindung der Verstelleinheit mit der Gegendruckplatte.

Zudem ist es vorteilhaft, wenn die Verstelleinheit als eine weggesteuerte Verstelleinheit ausgestaltet ist. Vorzugsweise kann die Verstelleinheit als Spindelsystem ausgestaltet sein. Erfindungsgemäß weist das Spindelsystem eine auf eine Spindel aufgeschraubte Spindelmutter zum Verdrehen des Rampenrings und ein drehfest mit der Spindel verbundenes Ritzel auf, wobei das Ritzel von einer in dem Umfang des Ritzels eingreifbaren Antriebseinheit, beispielsweise nach Art einer Antriebsklinke, verdrehbar ist.

Des Weiteren ist es erfindungsgemäß wenn die Verstelleinheit eine Spindel und eine von der Anpressplatte betätigbare Antriebseinheit zum Ermitteln des verschleißbedingten Fehlabstands der Anpressplatte zur Gegendruckplatte aufweist und wobei die Spindel von der Antriebseinheit verdrehbar ist. Zum Verdrehen des Rampenrings kann die Verstelleinheit beispielsweise eine auf die Spindel aufgeschraubte Spindelmutter und ein drehfest mit der Spindel verbundenes Ritzel aufweisen, wobei das Ritzel von einer in den Umfang des Ritzels eingreifbaren Antriebseinheit verdrehbar ist. Die Antriebseinheit kann beispielsweise eine an einer Antriebsfeder angeordnete Antriebsklinke aufweisen. Während einer Bewegung der Anpressplatte zu der Gegendruckplatte wird die Antriebseinheit von der Anpressplatte so gedrückt, dass die Antriebsklinke auf Zähnen des Ritzels gleitet und bei einem vorgegebenen Verschleiß in eine Zahnlücke zwischen zwei Zähnen einrastet. Die Antriebsklinke nimmt beim nächsten Öffnungsvorgang der Reibungskupplung das Ritzel formschlüssig mit und verdreht dabei das Ritzel und damit die Spindel, wodurch die Spindelmutter entlang der Spindel bewegt wird und den Rampenring um einen entsprechenden Winkelbetrag verdreht, um die Reibungskupplung dadurch nachzustellen. Die weggesteuerte Verstelleinheit kann insbesondere im Übrigen wie in der DE 10 2009 035 225 A1, WO 2009/056092 A1 oder DE 10 2011 086 995 A1 beschrieben ausgebildet sein, auf deren Inhalt als Teil der Erfindung hiermit verwiesen wird.

Zudem ist es vorteilhaft, wenn eine Antriebseinheit der Verstelleinheit an der Gegendruckplatte befestigt ist. Dies bedeutet insbesondere, dass die Verstelleinheit um die Antriebseinheit an der Gegendruckplatte ergänzt ist. Somit bilden die Antriebseinheit und die Verstelleinheit eine einzige Nachstelleinheit, die deutlich kompakter ist. Da die gesamte Nachstelleinheit damit an der Gegendruckplatte befestigt ist, können andere Bauteile, wie zum Beispiel der Schwungraddeckel, deutlich einfacher und kostengünstiger ausgestaltet werden.

Darüber hinaus ist es vorteilhaft, wenn die Gegendruckplatte mehrere in axialer Richtung abstehende Gegenrampen zur Ausbildung eines Gegenlagers für die Rampen des Rampenrings aufweist. Die Gegenrampen an der Gegendruckplatte können im Wesentlichen identisch zueinander ausgebildet und in Umfangsrichtung gleichmäßig verteilt sein. Vorteilhaft kann die Anzahl der Gegenrampen der Anzahl der Rampen des Rampenrings entsprechen. Vorteilhaft können die Gegenrampen zudem direkt aus der Gegendruckplatte ausgeformt sein.

Die Erfindung sowie das technische Umfeld werden nachfolgend anhand der Figuren näher erläutert. Es ist darauf hinzuweisen, dass die Figuren eine besonders bevorzugte Variante der Erfindung zeigen, diese jedoch nicht darauf beschränkt ist. Dabei sind gleiche Bauteile in den Figuren mit denselben Bezugszeichen versehen. Es zeigen schematisch:
- Fig. 1:: eine Reibungskupplung in einem Längsschnitt; und
- Fig. 2:: eine Nachstelleinrichtung der Reibungskupplung.

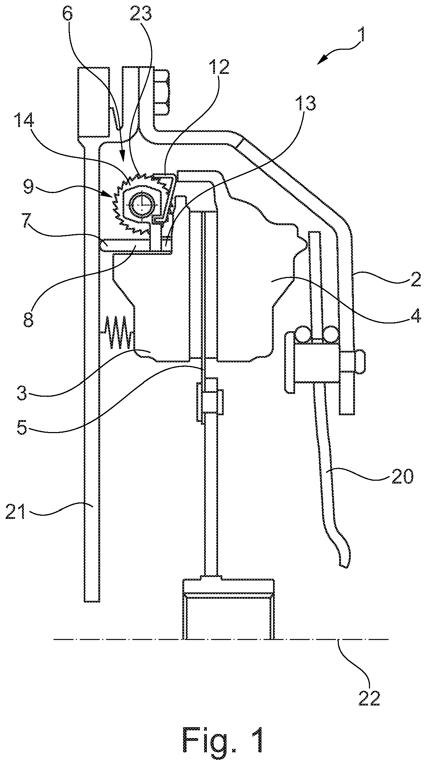

Die Fig. 1 zeigt eine Reibungskupplung 1 zum Kuppeln einer hier nicht gezeigten Antriebswelle eines Kraftfahrzeugmotors mit mindestens einer Getriebeeingangswelle eines Kraftfahrzeuggetriebes. Die Reibungskupplung 1 weist einen Kupplungsdeckel 2 und eine Anpressplatte 4 auf, wobei die Anpressplatte 4 zum reibschlüssigen Anpressen einer Kupplungsscheibe 5 an eine Gegendruckplatte 3 durch eine Tellerfeder 20 verstellbar ist. Der Kupplungsdeckel 2, die Gegendruckplatte 3, die Anpressplatte 4 und die Tellerfeder 20 sind drehfest mit einer Schwungscheibe 21 verbunden und um eine Rotationsachse 22 rotierbar. Zum Nachstellen eines verschleißbedingten Fehlabstands der Anpressplatte 4 zu der Gegendruckplatte 3 weist die Reibungskupplung 1 eine an der Gegendruckplatte 3 befestigte Nachstelleinrichtung 6 auf. Die Nachstelleinrichtung 6 weist einen in Umfangsrichtung verdrehbaren Rampenring 7 auf, wobei der Rampenring 7 mit mehreren in axialer Richtung abstehenden Rampen 8 versehen ist. Bei der hier gezeigten Variante der Reibungskupplung 1 ist der Rampenring 7 zwischen der Schwungscheibe 21 und der Gegendruckplatte 3 angeordnet. Die Gegendruckplatte 3 weist mehrere in axialer Richtung abstehende Gegenrampen 13 auf. Zum Verdrehen des Rampenrings 7 relativ zu der Gegendruckplatte 3 ist die Nachstelleinrichtung 6 mit einer an dem Rampenring 7 angreifenden Verstelleinheit 9 versehen.

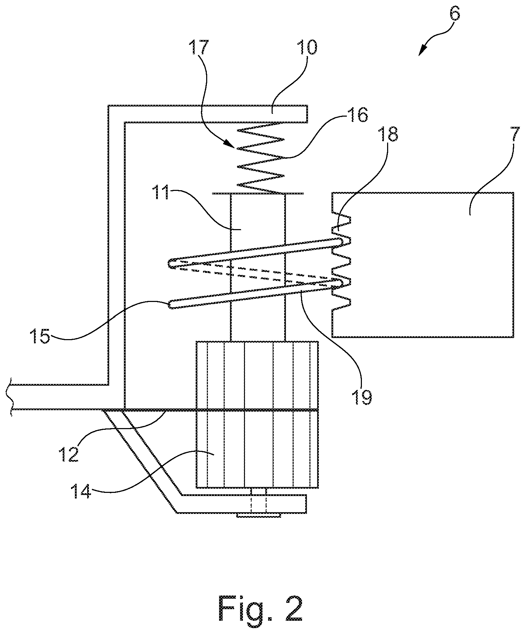

In diesem Beispiel ist die Verstelleinheit 9 als Spindelsystem ausgestaltet und durch einen in der Fig. 2 gezeigten Befestigungshalter 10 an der Gegendruckplatte 3 befestigt. Das Spindelsystem weist eine in der Fig. 2 gezeigte Spindel 11, ein auf der Spindel 11 drehfest fixiertes Schneckengewinde 19 und ein drehfest mit der Spindel 11 verbundenes Ritzel 14 auf. Das Ritzel 14 weist mehrere in den Umfang des Ritzels 14 verteilte Zähne 23 auf. Das Ritzel 14 kann von einer in die Zähne 23 des Ritzels 14 eingreifbaren Antriebseinheit 12 verdreht werden.

Wie aus der Fig. 2 zu erkennen ist, ist ein als Druckfeder 16 ausgestaltetes Kraftspeicherelement 17 an der Spindel 11 angeordnet. In diesem Ausführungsbeispiel ist die Druckfeder 16 zwischen der Spindel 11 und einem Befestigungshalter 10 angeordnet, wobei der Befestigungshalter 10 der Befestigung der Nachstelleinrichtung 6 an der in der Fig. 1 gezeigten Gegendruckplatte 3 dient. Wie anhand der Fig. 2 ferner zu erkennen ist, weist der Rampenring 7 mehrere Verbindungszähne 18 zur formschlüssigen Verbindung mit einem Schneckenrad 15 der Spindel 11 auf. Entsprechend ist das Schneckenrad 15 mit mehreren Schneckengewinden 19 zur formschlüssigen Verbindung mit dem Rampenring 7 versehen. Durch das Eingreifen der Schneckengewinde 19 zwischen den Verbindungszähnen 18 des Rampenrings 7 ist das Schneckenrad 15 der Spindel 11 mit dem Rampenring 7 formschlüssig verbunden.

Bei einem vorgegebenen Verschleiß der Reibungskupplung 1 wird die in der Fig. 1 gezeigte Antriebseinheit 12 durch das Schließen der Reibungskupplung 1 von der Anpressplatte 4 nach links gedrückt. Demzufolge wird das Ritzel 14 verdreht. Somit drehen sich ebenfalls das Schneckenrad 15 und die Spindel 11. Da im geschlossenen Zustand der Reibungskupplung 1 der Rampenring 7 unter der Wirkung der Anpresskraft der Anpressplatte 4 geklemmt ist, kann der Rampenring 7 in diesem Zustand nicht bewegt werden. Die Rotationsbewegung der Spindel 11 beziehungsweise des Schneckenrads 15 wird durch die Verzahnung zwischen den Schneckengewinden 19 und den Verbindungszähnen 18 des Rampenrings 7 in eine translatorische Bewegung umgesetzt. Durch diese translatorische Bewegung der Spindel 11 wird die zwischen der Spindel 11 und dem Befestigungshalter 10 angeordnete Druckfeder 16 zusammengedrückt. Somit wird eine Vorspannkraft in der Druckfeder 16 erzeugt und gespeichert. Wird die Reibungskupplung 1 ausgerückt, ist der Rampenring 7 nicht mehr durch die Anpresskraft geklemmt. Die in der Druckfeder 16 gespeicherte Vorspannkraft wird beim Ausrückvorgang der Reibungskupplung 1 wieder freigegeben. Unter der Wirkung dieser Vorspannung werden die Spindel 11 und das Schneckenrad 15 von der Druckfeder 16 durch eine translatorische Bewegung in Umfangsrichtung der Reibungskupplung 1 geschoben. Dadurch werden die Verbindungszähne 18 des Rampenrings 7 von dem Schneckengewinde 19 des Schneckenrads 15 geschoben, wodurch der Rampenring 7 um einen entsprechenden Winkelbetrag verdreht wird, um die Reibungskupplung 1 dadurch nachzustellen.

Durch die vorliegende Erfindung kann insbesondere ein Schwungraddeckel deutlich kostengünstiger gestaltet werden.

## Patentansprüche

1. Reibungskupplung (1) zum Kuppeln einer Antriebswelle eines Kraftfahrzeugmotors mit mindestens einer Getriebeeingangswelle eines Kraftfahrzeuggetriebes, aufweisend einen Kupplungsdeckel (2), eine in Axialrichtung der Reibungskupplung (1) verlagerbare Gegendruckplatte (3), eine relativ zur Gegendruckplatte (3) axial verlagerbare Anpressplatte (4) zum reibschlüssigen Anpressen einer Kupplungsscheibe (5) zwischen der Gegendruckplatte (3) und der Anpressplatte (4) und eine an der Gegendruckplatte (3) abgestützte Nachstelleinrichtung (6) zum Nachstellen eines verschleißbedingten Fehlabstands der Anpressplatte (4) zur Gegendruckplatte (3), wobei die Nachstelleinrichtung (6) einen in Umfangsrichtung verstellbaren Rampenring (7), der mit mehreren in axialer Richtung abstehenden Rampen (8) versehen ist, und eine an dem Rampenring (7) angreifende Verstelleinheit (9) zum Verdrehen des Rampenrings (7) aufweist, und wobei die Verstelleinheit (9) an der Gegendruckplatte (3) befestigt ist, **dadurch gekennzeichnet, dass** die Verstelleinheit (9) eine Spindel (11) und eine von der Anpressplatte (4) betätigbare Antriebseinheit (12) zum Ermitteln des verschleißbedingten Fehlabstands der Anpressplatte (4) zur Gegendruckplatte (3) aufweist, wobei die Spindel (11) von der Antriebseinheit (12) verdrehbar ist und zum Verdrehen des Rampenrings (7) eine auf der Spindel (11) aufgeschraubte Spindelmutter und ein drehfest mit der Spindel (11) verbundenes Ritzel (14) aufweist, wobei das Ritzel (14) von der in den Umfang des Ritzels (14) eingreifbaren Antriebseinheit (12) verdrehbar ist.

2. Reibungskupplung (1) nach Anspruch 1, wobei die Verstelleinheit (9) durch einen Befestigungshalter (10) an der Gegendruckplatte (3) befestigt ist.

3. Reibungskupplung (1) nach einem der vorhergehenden Ansprüche, wobei die Verstelleinheit (9) als eine weggesteuerte Verstelleinheit ausgestaltet ist.

4. Reibungskupplung (1) nach einem der vorhergehenden Ansprüche, wobei eine Antriebseinheit (12) der Verstelleinheit (9) an der Gegendruckplatte (3) befestigt ist.

5. Reibungskupplung (1) nach einem der vorhergehenden Ansprüche, wobei die Gegendruckplatte (3) mehrere in axialer Richtung abstehende Gegenrampen (13) zur Ausbildung eines Gegenlagers für die Rampen (8) des Rampenrings (7) aufweist.

## Claims

1. Friction clutch (1) for coupling a drive shaft of a motor vehicle engine to at least one transmission input shaft of a motor vehicle transmission, having a clutch cover (2), a counterpressure plate (3) which can be moved in the axial direction of the friction clutch (1), a pressure plate (4) which can be moved axially relative to the counterpressure plate (3) for pressing a clutch plate (5) in a frictionally locking manner between the counterpressure plate (3) and the pressure plate (4), and an adjusting device (6) which is supported on the counterpressure plate (3) for the adjustment of a wear-induced incorrect spacing of the pressure plate (4) from the counterpressure plate (3), the adjusting device (6) having a ramp ring (7) which is adjustable in the circumferential direction and is provided with a plurality of ramps (8) which project in the axial direction, and an adjusting unit (9) which acts on the ramp ring (7) in order to rotate the ramp ring (7), and the adjusting unit (9) being fastened to the counterpressure plate (3), **characterized in that** the adjusting unit (9) has a spindle (11) and a drive unit (12) which can be actuated by the pressure plate (4) in order to determine the wear-induced incorrect spacing of the pressure plate (4) from the counterpressure plate (3), it being possible for the spindle (11) to be rotated by the drive unit (12), and the said spindle (11) having, in order to rotate the ramp ring (7), a spindle nut which is screwed on the spindle (11) and a pinion (14) which is connected fixedly to the spindle (11) so as to rotate with it, it being possible for the pinion (14) to be rotated by the drive unit (12) which can engage into the circumference of the pinion (14).

2. Friction clutch (1) according to Claim 1, the adjusting unit (9) being fastened to the counterpressure plate (3) by way of a fastening holding device (10).

3. Friction clutch (1) according to either of the preceding claims, the adjusting unit (9) being configured as a displacement-controlled adjusting unit.

4. Friction clutch (1) according to one of the preceding claims, a drive unit (12) of the adjusting unit (9) being fastened to the counterpressure plate (3).

5. Friction clutch (1) according to one of the preceding claims, the counterpressure plate (3) having a plurality of counter-ramps (13) which project in the axial direction for configuring a counterbearing for the ramps (8) of the ramp ring (7).

## Revendications

1. Embrayage à friction (1) destiné au couplage d'un arbre d'entraînement d'un moteur de véhicule à moteur doté d'au moins un arbre d'entrée de transmission d'une transmission de véhicule à moteur,
comprenant un couvercle d'embrayage (2), une plaque de contre-pression (3) déplaçable dans la direction axiale de l'embrayage à friction (1),
une plaque de pression (4) déplaçable axialement relativement à la plaque de contre-pression (3) destinée au pressage créant une friction d'un disque d'embrayage (5) entre la plaque de contre-pression (3) et la plaque de pression (4) et
un dispositif ajusteur (6) s'appuyant sur la plaque de contre-pression (3) destiné à ajuster un écart de rupture, causé par l'usure, de la plaque de pression (4) à la plaque de contre-pression (3),
dans lequel le dispositif ajusteur (6) comporte un anneau de rampes (7) réglable dans la direction du pourtour, prévu avec plusieurs rampes (8) écartées dans la direction axiale, et une unité de réglage (9) venant en prise sur l'anneau de rampes (7) destinée à mettre en rotation l'anneau de rampes (7), et
dans lequel l'unité de réglage (9) est fixée sur la plaque de contre-pression (3), **caractérisé en ce que** l'unité de réglage (9) comporte une broche (11) et une unité de transmission (12) actionnable par la plaque de pression (4) pour déterminer l'écart de rupture, causé par l'usure, de la plaque de pression (4) à la plaque de contre-pression (3),
dans lequel la broche (11) est mise en rotation par l'unité de transmission (12) et comporte, pour mettre en rotation l'anneau de rampes (7), un écrou de broche vissé sur la broche (11) et un pignon (14) raccordé à la broche (11) sans rotation possible,
dans lequel le pignon (14) peut être mis en rotation par l'unité de transmission (12) venant en prise avec le pourtour du pignon (14).

2. Embrayage à friction (1) selon la revendication 1, dans lequel l'unité de réglage (9) est fixée sur la plaque de contre-pression (3) par le biais d'un support de fixation (10).

3. Embrayage à friction (1) selon l'une des revendications précédentes, dans lequel l'unité de réglage (9) est conçue comme unité de réglage commandée à distance.

4. Embrayage à friction (1) selon l'une des revendications précédentes, dans lequel une unité de transmission (12) de l'unité de réglage (9) est fixée sur la plaque de contre-pression (3).

5. Embrayage à friction (1) selon l'une des revendications précédentes, dans lequel la plaque de contre-pression (3) comporte plusieurs contre-rampes (13) écartées dans la direction axiale destinée à constituer un contre-palier pour les rampes (8) de l'anneau de rampes (7).
